# EUROPEAN PATENT APPLICATION

(11) **EP 4 836 079 A1**
(43) Date of publication of application: **04.11.2026**
(21) Application number: 24910201.3
(22) Date of filing: 22.10.2024
(51) Int. Cl.: H01M 10/613, H01M 10/659

(54) **BATTERY ASSEMBLY, BATTERY PACK, AND ELECTRICAL SYSTEM**

(30) Priority: 29.12.2023 CN 202323661400 U
(71) Applicant: BYD Company Limited, Shenzhen, Guangdong 518118 (CN)
(72) Inventor: SU, Bizhe, Shenzhen, Guangdong 518118 (CN); CAI, Yaomin, Shenzhen, Guangdong 518118 (CN); ZHONG, Rijun, Shenzhen, Guangdong 518118 (CN); YUE, Qianli, Shenzhen, Guangdong 518118 (CN); LU, Zhipei, Shenzhen, Guangdong 518118 (CN)
(74) Representative: Mathys & Squire
(86) International application number: PCT/CN2024/126321
(87) International publication number: WO 2025/139260

(57) **Abstract**

An electrical system, the electrical system being provided with a battery pack, and the battery pack being provided with a battery assembly. The battery assembly comprises two adjacent battery cells and a heat-absorbing substance layer arranged between the adjacent battery cells. Opposite surfaces of the two adjacent battery cells are first surfaces, the heat-absorbing substance layer is located between the first surfaces of the two adjacent battery cells, the volume of the heat-absorbing substance layer is V, and 0.2*A*B≤V≤(z-α*w*C)*A*B is satisfied. mm is the unit used for A, B, C, and z. The distance between the first surfaces of the two adjacent battery cells is z, the rate of volume expansion of a battery cell in the end state of the service life of the battery cell is w, the length of the battery cell is A, the width of the battery cell is B, the thickness of the battery cell is C, and α is a correction coefficient.

## Description

### CROSS-REFERENCE TO RELATED APPLICATIONS

The present disclosure claims priority to Chinese Patent Application No. 202323661400.0 filed on December 29, 2023 and entitled "BATTERY ASSEMBLY, BATTERY PACK, AND ELECTRICAL SYSTEM", which is incorporated herein by reference in its entirety.

### FIELD

The present disclosure relates to automobile batteries, and in particular, to a battery assembly. In addition, the present disclosure also relates to a battery pack and an electrical system.

### BACKGROUND

Most of the safety problems of power batteries are battery cell safety problems. When thermal runaway of a single battery cell occurs, the battery cell undergoing thermal runaway will quickly transfer heat to adjacent battery cells because temperature of the battery cell will rise rapidly and sharply and the structural state itself will also change; because the adjacent battery cells receive a large amount of heat energy, thermal runaway will also occur after the temperature rises and a large amount of heat energy will be rapidly generated. This process will further increase the internal temperature of the battery system and eventually cause thermal runaway of the whole battery pack, resulting in safety accidents.

Existing power batteries have low reliability for handling thermal runaway. For example, in order to suppress thermal propagation during the thermal runaway process of lithium-ion batteries, aerogels are usually selected to suppress the heat diffusion between battery cells, but aerogels can only delay the heat transfer, and it is difficult to effectively control thermal runaway propagation under battery abuse conditions.

Therefore, it is necessary to provide a battery assembly to overcome or mitigate the above-described technical problems.

### SUMMARY

The technical problem to be solved by the present disclosure is to provide a battery assembly, the battery assembly can effectively absorb a large amount of heat released inside the battery and effectively control thermal runaway propagation.

The technical problem to be solved by the present disclosure is to provide a battery pack, wherein the battery pack can effectively absorb a large amount of heat released inside the battery and effectively control thermal runaway propagation.

In addition, the technical problem to be solved by the present disclosure is to provide an electrical system, the battery pack of the electrical system can effectively absorb a large amount of heat released inside the battery, and effectively control thermal runaway propagation.

In order to solve the above technical problems, a first aspect of the present disclosure provides a battery assembly. The battery assembly includes two adjacent battery cells and a heat-absorbing substance layer arranged between the adjacent battery cells. The opposite surfaces of the two adjacent battery cells are first surfaces, the heat-absorbing substance layer is located between the first surfaces of the two adjacent battery cells, the volume of the heat-absorbing substance layer is V, and 0.2*A*B ≤ V ≤ (z-α*w*C) *A*B is satisfied, wherein, mm is the unit used for A , B, C, and z. The distance between the first surfaces of the two adjacent battery cells is z, a rate of volume expansion of the battery cell in the end state of service life of a battery cell is w, a first side length of the first surface of the battery cell is A, a second side length of the first surface of the battery cell is B, a third side length of the battery cell is C, α is a correction coefficient, and an extension line of the first side length, an extension line of the second side length, and an extension line of the third side length are perpendicular to each other.

In some embodiments, an external encapsulation is further included, and the external encapsulation is arranged outside the heat-absorbing substance layer.

In some embodiments, the external encapsulation is an encapsulating film that covers outside the heat-absorbing substance layer.

In some embodiments, the external encapsulation is a sealing structure disposed around the first surfaces of the two adjacent battery cells, the sealing structure and the first surfaces of the two adjacent battery cells are jointly enclosed to form an expanded area, and the heat-absorbing substance layer is accommodated in the expanded area.

In some embodiments, the sealing structure comprises extending edges of two adjacent battery cell edges extending toward each other and sealingly connected to each other; or, the sealing structure comprises an extending edge extending from an edge of one of the two adjacent battery cells to the other battery cell, and the extending edge is sealingly connected to the other battery cell.

In some embodiments, the heat-absorbing substance layer is a phase change substance layer, and the phase change substance layer is adapted to generate a gas; wherein the external encapsulation is provided with a discharge device for discharging gas to the outside.

In some embodiments, the external encapsulation is a metal film.

In some embodiments, the discharge device is an explosion-proof valve.

In some embodiments, the first side length of the battery cell is A, the second side length of the battery cell is B, and the third side length of the battery cell is C, which satisfies: 70 mm ≤ A ≤1500 mm, 30 mm ≤ B ≤500 mm, and 6 mm ≤ C ≤100 mm.

In some embodiments, the distance between the first surfaces of the two adjacent battery cells is z, which satisfies: 0.2 mm ≤ z ≤10 mm.

In some embodiments, the rate of volume expansion of the battery cell in the end state of service life of the battery cell is w, and the w satisfies: 0≤ w ≤20%.

In some embodiments, when 0≤ w ≤5%, the preset correction coefficient α=0.65; when 5% <w ≤10%, the preset correction coefficient α=0.55; when 10% <w ≤15%, the preset correction coefficient α=0.45; when 15% <w ≤20%, the preset correction coefficient α=0.35.

In some embodiments, the heat-absorbing substance layer is a hydrogel layer.

In some embodiments, an orthographic projection of the heat-absorbing substance layer on a plane in which the first surface is located is within the first surface.

In some embodiments, the battery assembly includes a plurality of the battery cells, the plurality of the battery cells are spaced apart in a direction parallel to the third side length, and the heat-absorbing substance layer is arranged between the two adjacent battery cells.

A second aspect of the present disclosure provides a battery pack, the battery pack includes a battery case and the battery assembly according to any one of the above technical solutions, and the battery assembly is located in the battery case.

A third aspect of the present disclosure provides an electrical system, and the electrical system includes the battery pack according to the above technical solutions or the battery assembly according to any one of the above technical solutions.

Through the above technical solutions, the beneficial effects of the present disclosure are as follows:

in the present disclosure, by arranging a heat-absorbing substance layer between adjacent battery cells, the heat-absorbing substance layer can absorb a large amount of heat released by the thermal runaway process of the battery, and effectively control thermal runaway propagation.

In addition, the volume V of the heat-absorbing substance layer is configured to satisfy 0.2*A*B ≤ V ≤ (z-α*w*C) * A *B, which not only ensures the heat-absorbing effect, but also ensures that the heat-absorbing substance layer is not damaged when the battery expands, and thus improves safety.

Other features and advantages of the present disclosure will be described in detail in the Detailed Description section that follows.

### BRIEF DESCRIPTION OF THE DRAWINGS

In order to more clearly explain the technical solutions in the embodiments of the present disclosure, the following will briefly introduce the accompanying drawings that need to be used in the description of the embodiments or related techniques. Obviously, the accompanying drawings in the following description are only some embodiments of the present disclosure, and for those of ordinary skill in the art, other drawings can be obtained from these drawings without exerting creative effort.
FIG. 1 is one of the structural schematic diagrams of a battery assembly in a specific embodiment of the present disclosure;
FIG. 2 is a second structural schematic diagram of a battery assembly in a specific embodiment of the present disclosure;
FIG. 3 is a third structural schematic diagram of a battery assembly in a specific embodiment of the present disclosure;
FIG. 4 is a schematic three-dimensional structural diagram of a battery assembly in a specific embodiment of the present disclosure;
FIG. 5 is a schematic structural diagram of an electrical system in a specific embodiment of the present disclosure.

### DESCRIPTION OF REFERENCE

| | | | |
|---|---|---|---|
| 1 | cell | 2 | expanded area |
| 3 | heat-absorbing substance layer | 4 | discharge device |
| 5 | external encapsulation | | |

### DETAILED DESCRIPTION

Specific embodiments of the present disclosure will be described in detail below with reference to the accompanying drawings. It will be understood that the specific embodiments described herein are intended to illustrate and explain the present disclosure only, and are not intended to limit the present disclosure.

In the description of the present disclosure, it will be noted that, unless otherwise explicitly specified and limited, the terms "installation", "setting" or "connection" will be understood in a broad sense, for example, the term "connection" may be a fixed connection, a detachable connection, or an integral connection; it may be a direct connection or an indirect connection through an intermediary medium, or it may be an internal communication between two elements or an interactive relationship between two elements. For those of ordinary skill in the art, the specific meanings of the above terms in present disclosure will be understood according to specific circumstances.

In the present disclosure, the location words used are based on the orientation or positional relationship shown in the drawings, and do not indicate or imply that the device or element referred to must have a specific orientation, be constructed, and operate in a specific orientation, and therefore will not be understood as limiting the present disclosure; the orientation terms of the present disclosure will be understood in connection with the actual installation state.

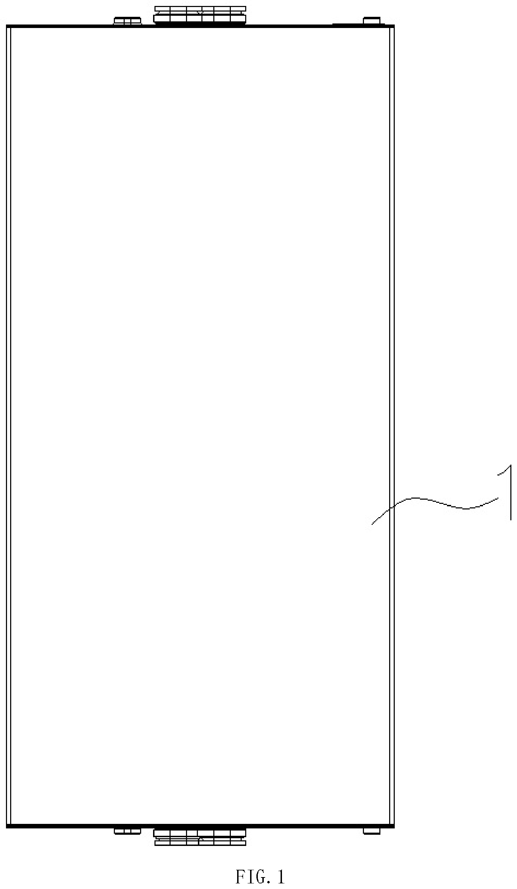

As shown in FIGS. 1 to 4, a basic embodiment of the present disclosure provides a battery assembly. The battery assembly includes two adjacent battery cells 1 and a heat-absorbing substance layer 3, the heat-absorbing substance layer 3 is arranged between the adjacent battery cells 1. The opposite surfaces of the adjacent two battery cells 1 are first surfaces, and the heat-absorbing substance layer 3 is located between the first surfaces of the adjacent two battery cells 1; the volume of the heat-absorbing substance layer 3 is V, and 0.2*A*B ≤ V ≤ (z-α *w*C) * A *B is satisfied, wherein, mm is the unit used for A, B, C, and z. The distance between the first surfaces of two adjacent battery cells 1 is z, the rate of volume expansion of the battery cell in the end state of service life of the battery cell is w, a first side length of the first surface of the cell 1 is A, a second side length of the first surface of the cell 1 is B, a third side length of the cell 1 is C, α is a correction coefficient, and an extension line of the first side length, an extension line of the second side length, and an extension line of the third side length are perpendicular to each other.

The heat-absorbing substance layer 3 is arranged between adjacent battery cells 1, and when a large amount of heat is released due to thermal runaway occurs in one battery cell or some battery cells, the heat-absorbing substance layer 3 can absorb the heat, thereby effectively controlling thermal runaway propagation. In addition, the volume V of the heat-absorbing substance layer 3 is configured to satisfy 0.2*A*B ≤ V ≤ (z-α*w*C) *A*B, which not only ensures the heat-absorbing effect, but also ensures that the heat-absorbing substance layer is not damaged when the battery expands, and thus improves safety.

It will be noted that the battery cell 1 is a square battery cell, that is, the first side length of the first surface of the battery cell 1 is A, the second side length of the first surface of the battery cell 1 is B, and the third side length of the battery cell 1 is C, and the extension line of the first side length, the extension line of the second side length, and the extension line of the third side length are perpendicular to each other. Further, in some embodiments, the first side length A is the length of the battery cell 1, the second side length B is the width of the battery cell 1, and the third side length C is the thickness of the battery cell 1, wherein the length A of the battery cell 1, the width B of the battery cell 1, and the thickness C of the battery cell 1 do not include the dimensions of the terminal-pole when measured. Generally, the length A of the battery cell 1, the width B of the battery cell 1, and the thickness C of the battery cell 1 can be obtained from the product description of the battery pack or battery cell, or the side of the cell can be measured directly.

It will be noted that EOL is the end state of the service life of the battery cell, and usually refers to when the battery cell capacity (that is, the rated capacity described in the specification or product introduction) has decayed to 80% of its initial capacity. BOL is the state when the initial capacity of the battery cell in the product description (the rated capacity described in the specification or the product introduction), and EOL is the state when the initial capacity value of the battery cell in the product description is multiplied by 80%. w is the rate of volume expansion of the battery cell in the end state of service life of the battery cell, that is, the rate of volume expansion of the battery cell 1 at EOL.

Here, the rate of volume expansion of the battery cell 1 at EOL is measured as follows:
1. A charge and discharge test is carried out on the battery cell until the capacity of the battery cell reaches 80% of a nominal capacity, that is, the battery cell reaches the EOL state;
2. A volume of the battery cell in the EOL state is measured by a drainage method, wherein the substance in the drainage method can be an insulating liquid, that is, filling a container with the insulating liquid, and then obtaining the volume of the battery cell in the EOL state by the drainage method;
3. A volume of the battery cell in BOL state is obtained. Generally, the volume of the battery cell in BOL state can be obtained from the product description of the battery pack or battery cell. In addition, the volume in the BOL state can also be determined by directly measuring the edge in the case where the battery cell capacity is the product introduced capacity. Specifically, since the surrounding edges of the battery cell are generally less influenced by expansion when expansion occurs, the length, width and height of the battery cell are determined by measuring the edges of the battery cell directly, and the volume of the battery cell is calculated; and
4. A difference between the volume of the battery cell in the EOL state and the volume of the battery cell in the BOL state is calculated.

Here, w is a ratio of the difference in the above step 4 to the volume of the battery cell in the BOL state.

It will be noted that α is the preset correction coefficient. Since the actual requirements of the product are different from the maximum expansion degree of the theoretical battery cell or the rate of volume expansion of the battery cell itself measured is different from that of the battery cell placed in the PACK (battery pack), it is necessary to modify the rate of volume expansion w of the battery cell 1 in the end state of service life of the battery cell according to the actual situation. Generally, the correction coefficient α may be determined empirically, or may be determined experimentally based on the experimental product according to specific standards.

Specifically, in some embodiments, w satisfies 0≤ w ≤20%, and α is the preset correction coefficient, wherein, when the range of w is 0≤ w ≤5%, the preset correction coefficient α=0.65; when the range of w is 5% <w ≤10%, the preset correction coefficient α=0.55; when 10% <w ≤15%, the preset correction coefficient α=0.45; when 15% <w ≤20%, the preset correction coefficient α=0.35. It will be noted that the rate of expansion of the battery cell in the package body of the battery pack is smaller than that of the battery cell measured individually, and the larger the rate of expansion, the larger the difference, so different correction coefficients are given in different ranges of the rate of expansion; at the same time, the heat-absorbing substance layer 3 also undergoes some aging in the EOL state, so the value of the correction coefficient should be further reduced.

Further, in an embodiment of the present disclosure, the orthographic projection of the heat-absorbing substance layer 3 on a plane in which the first surface is located is within the first surface to ensure that the heat-absorbing substance layer 3 can be completely in contact with the first surface, and to improve the heat-absorbing effect of the heat-absorbing substance layer 3 on the battery cell.

In order to avoid loss of the heat-absorbing substance layer 3 due to contact with air under normal working conditions, an external encapsulation 5 may be arranged outside the heat-absorbing substance layer 3 to seal the heat-absorbing substance layer 3.

As a specific embodiment of the external encapsulation 5, the external encapsulation 5 may be an encapsulating film, and the encapsulating film may be specifically a sealing film, and covers outside the heat-absorbing substance layer 3. The sealing film can effectively realize sealing protection of the heat-absorbing substance layer 3 and ensure the heat-absorbing effect of the heat-absorbing substance layer 3. The sealing film may be a PVC (polyvinyl chloride) sealing film.

As another specific embodiment of the external encapsulation 5, the external encapsulation 5 is a sealing structure disposed around the first surfaces of two adjacent battery cells 1, the sealing structure and the first surfaces of the two adjacent battery cells 1 are jointly enclosed to form an expanded area 2, and the heat-absorbing substance layer 3 is accommodated in the expanded area 2. A gap size of the expanded area 2 is the same as a thickness of the heat-absorbing substance layer 3. The thickness of the heat-absorbing substance layer 3 is configured to be equal to the gap size of the expanded area 2, and the heat-absorbing substance layer 3 can be fixed between two adjacent battery cells 1. The hydrogel can be contacted with air for water vapor exchange, and a sealing structure is arranged between adjacent battery cells 1 around the expanded area 2, which can prevent the hydrogel from losing water.

As a specific embodiment of the sealing structure, the sealing structure of the present disclosure can be obtained by extending a case edge of the battery cell 1. Specifically, taking two adjacent battery cells 1 as an example, the case edge of one battery cell 1 is extended to the other battery cell 1 by a certain size to form an extended edge; or, the case edges two adjacent battery cells 1 extend toward each other and are connected to each other; when the battery cells 1 are stacked, two adjacent battery cells are bonded together by an adhesive to achieve a sealing effect.

In some embodiments, the distance between the first surfaces of two adjacent battery cells 1 is z, that is, the gap of the expanded area 2 is z, which satisfies 0.2 mm ≤ z ≤10 mm. The heat-absorbing substance layer 3 is disposed at the center of the first surface of one battery cell 1, the thickness of the heat-absorbing substance layer 3 and the gap of the expanded area 2 are both z, an area dimension of the contact surface between the heat-absorbing substance layer 3 and the one battery cell 1 is smaller than an area dimension of the one battery cell 1, the volume of the heat-absorbing substance layer 3 is V, the first side length of the one battery cell 1 is A, the second side length of the one battery cell 1 is B, and the third side length of the one battery cell 1 is C, which satisfies 70 mm ≤ A ≤1500 mm, 30 mm ≤ B ≤500 mm, and 6 mm ≤ C ≤100 mm. Since the one battery cell 1 has a certain volume expansion in the end state of service life of the battery cell, and the rate of volume expansion is w, a volume size of the heat-absorbing substance layer 3 needs to satisfy the following relationship: 0.2* A *B ≤ V ≤ (z-α*w*C) * A *B. An empty region between the sealing structure and the heat-absorbing substance layer 3 serves as a buffer region for expansion of the one battery cell 1, and the expansion of the one battery cell 1 compresses the heat-absorbing substance layer 3 to expand outward, to reduce damage to the sealing structure by expansion of the heat-absorbing substance layer 3. Since the thickness of the heat-absorbing substance layer 3 is consistent with the gap between two adjacent battery cells 1, a stacking force of the battery cells 1 and an interaction force between the heat-absorbing substance layer 3 and the first surface of the battery cells 1 can fix the heat-absorbing substance layer 3 at the center of a large surface of the battery cells 1.

In some embodiments, the heat-absorbing substance layer 3 may be a hydrogel layer, that is, a hydrogel is arranged between large surfaces of adjacent battery cells 1. Hydrogel is a gel with water as a dispersion medium, and a part of hydrophobic groups and hydrophilic residues are introduced into a water-soluble polymer with a network crosslinked structure, and the hydrophilic residues are combined with water molecules to connect the water molecules in the network, and the hydrophobic residues expand when exposed to water; which is a kind of polymer network system, soft in nature, can maintain a certain shape, can absorb a large amount of water. When a large amount of heat is released by thermal runaway in a certain battery cell or some battery cells, the evaporation of water is used to absorb the heat, thus solving the problem of thermal diffusion between battery cells.

Alternatively, the heat-absorbing substance layer 3 may also employ a superabsorbent polymeric substance or other liquid-loaded absorbent substance, such as any suitable hydrogel polymer or superabsorbent polymer. Exemplary hydrophilic or water-absorbent polymeric substances include, but are not limited to, polyacrylic acids, such as acrylic copolymers of acrylic acid and salts. Suitable substances include alkali metal salts of polyacrylic acid, polyacrylamides, polyvinyl alcohols, ethylene maleic anhydride copolymers, polyvinyl ethers, hydroxypropylcellulose, polyvinylmorpholinone, vinyl sulfonic acid, polyacrylates, polyacrylamides, polymers and copolymers of polyvinylpyridine, and the like. Other suitable polymers include hydrolyzed acrylonitrile grafted starch, acrylic acid grafted starch, carboxymethyl cellulose, isobutylene maleic anhydride copolymers, and mixtures thereof. Other suitable polymers include inorganic polymers, such as polyphosphonitrile, and the like.

Alternatively, the heat-absorbing substance layer 3 may be a solid phase change substance, such as paraffin wax; alternatively, the heat-absorbing substance layer 3 may contain other liquid phase change substances, such as ethanol, in addition to water.

As another specific embodiment of the sealing structure, a plastic sheet may be arranged between adjacent battery cells 1 around the expanded area 2 for sealing, that is, along the periphery of the battery cells 1, a plastic sheet may be attached in a direction in which the side surfaces of two adjacent battery cells 1 are attached to each other for sealing. Of course, the above technical solution is not limited to a plastic sheet, but also a metal sheet is arranged around the expanded area 2 for sealing, or other suitable means.

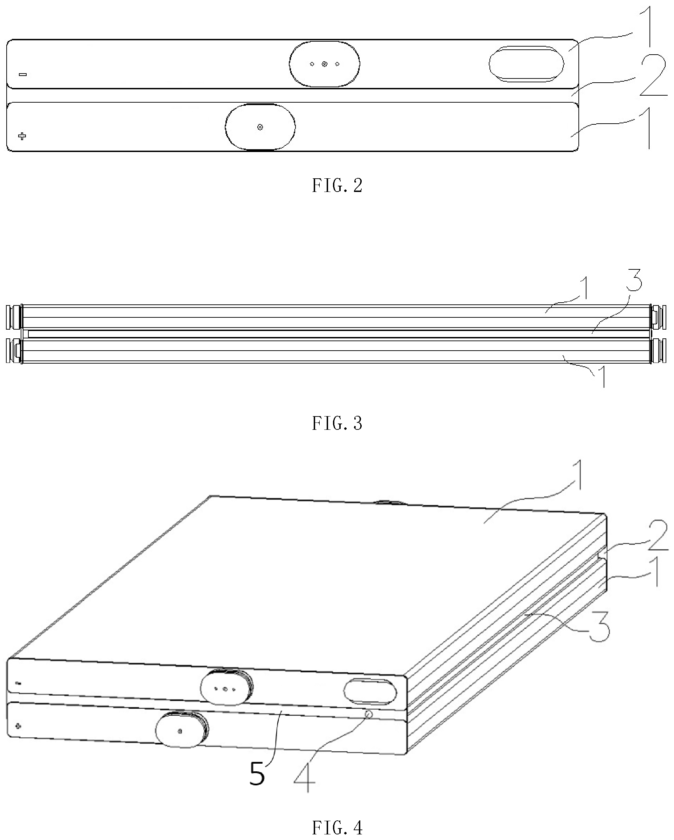

Further, as shown in FIG. 4, the sealing structure is provided with a discharge device 4 for discharging water vapor to the outside. It is conducive to the orderly eruption of water vapor in the hydrogel during thermal runaway.

Specifically, the discharge device 4 may be an explosion-proof valve or other valve capable of achieving an equivalent effect.

In some embodiments, the external encapsulation 5 may be a metal film, which can prevent the heat-absorbing substance layer 3 inside the external encapsulation 5 from seeping out.

In an embodiment of the present disclosure, the battery assembly includes a plurality of battery cells 1, the plurality of battery cells 1 are spaced apart in a direction parallel to the third side length, and a heat-absorbing substance layer is arranged between two adjacent battery cells 1. Specifically, the heat-absorbing substance layer 3 is placed between two adjacent battery cells to ensure the safety of the entire battery assembly and improve the heat-absorbing efficiency of the heat-absorbing substance layer 3 to the battery cells 1.

In order to more intuitively illustrate the effect of the battery assembly of the present disclosure in controlling the thermal runaway propagation, refer to the volume V of the heat-absorbing substance layer 3 and the relevant data of the single battery cell in the following table.

A nail penetration test is performed on the battery assembly, which specifically includes the following steps: five battery cells are arranged in sequence after being fully charged, and a heat-absorbing substance layer is arranged between each two battery cells. A steel needle with a diameter of 3mm is used to puncture the middle position of the middle battery cell at a speed of 0.5mm/s until thermal runaway occurs in the battery cell, at which point the penetration is stopped, and observation is continued until the collected temperature is less than 100°C. After the experiment, whether thermal runaway has occurred in the adjacent batteries (the standard for thermal runaway is voltage drop or explosion-proof valve opening) is recorded, that is, whether thermal diffusion has occurred. The above EOL battery cell battery assembly is disassembled, and whether the substance inside the heat-absorbing substance layer is clearly cracked (that is, whether the substance is cracked is judged) is observed.

| | Embodiment 1 | Embodiment 2 | Embodiment 3 | Embodiment 4 | Embodiment 5 | Comparative Example 1 | Comparative Example 2 | Comparative Example 3 |
|---|---|---|---|---|---|---|---|---|
| A/mm | 700 | 610 | 610 | 480 | 350 | 610 | 480 | 610 |
| B/mm | 100 | 100 | 100 | 84 | 113 | 100 | 84 | 100 |
| C/mm | 13 | 15 | 15 | 18 | 35 | 15 | 18 | 15 |
| V lower limit (mm³) | 14,000 | 12,200 | 12,200 | 8,064 | 7,910 | 12,200 | 8,064 | 12,200 |
| z/mm | 0.7 | 0.8 | 1.1 | 2.8 | 4 | 1.1 | 1.4 | 0.8 |
| w | 3% | 4% | 7% | 12% | 16% | 7% | 12% | 4% |
| α | 0.65 | 0.65 | 0.55 | 0.45 | 0.35 | 0.55 | 0.45 | 0.65 |
| z-α*w*C | 0.4 | 0.4 | 0.5 | 1.8 | 2 | 0.5 | 0.4 | 0.4 |
| V upper limit (mm³) | 31,255 | 25,010 | 31,873 | 73,705 | 80,682 | 31,873 | 17,257 | 25,010 |
| substanceV (mm³) | 26,600 | 24,200 | 28,670 | 40,320 | 71,190 | 10,980 | 72,576 | 48,800 |
| thermal diffusion result | pass | pass | pass | pass | pass | fail | pass | pass |
| EOL substance state | normal | normal | normal | normal | normal | normal | crack | crack |

From the comparison of embodiments 1 to 5 and comparative example 1, it can be seen that the mass of the heat-absorbing substance layer is less than the lower limit value of the above relationship of the present disclosure, and the thermal diffusion of the thermal runaway battery cannot be suppressed; from the comparison of embodiments 1 to 5 and comparative example 2 to 3, it can be seen that when the mass of the heat-absorbing substance layer is greater than the lower limit value of the above relationship of the present disclosure, although the thermal diffusion of the thermal runaway battery does not occur, the substance cracks in the EOL state under this condition. Therefore, it can be seen from the results in the above table that when the heat-absorbing substance layer arranged between adjacent battery cells satisfies the relational expression of 0.2*A*B ≤ V ≤ (z-a*w*C) * A *B required by the present disclosure, the heat-absorbing substance can better suppress the heat diffusion of the battery cell to the adjacent battery cell during the thermal runaway process, and the substance of the heat-absorbing substance layer in the EOL state is in a good state to ensure that the heat-absorbing substance layer has a good heat-absorbing effect and thus effectively prevents the heat diffusion.

In order to better understand the technical concept of the present disclosure, the following description will be made in conjunction with relatively comprehensive technical features.

As shown in FIG. 1, a preferred embodiment of the present disclosure provides a battery assembly, the battery assembly includes a heat-absorbing substance layer 3, an expanded area 2 is arranged between adjacent battery cells 1, the heat-absorbing substance layer 3 is arranged in the expanded area 2, a gap size of the expanded area 2 is the same as a thickness of the heat-absorbing substance layer 3, a sealing structure is arranged between adjacent battery cells 1 around the expanded area 2, and the expanded area 2 is provided with a discharge device 4. The heat-absorbing substance layer 3 may be made of hydrogel, and the discharge device 4 may be an explosion-proof valve, which is conducive to the orderly eruption of water vapor in the hydrogel during thermal runaway. A gap of the expanded area 2 between two adjacent battery cells 1 is z, the heat-absorbing substance layer 3 is placed at the center of the large surface of the battery cell 1, the thickness of the heat-absorbing substance layer 3 and the gap of the expanded area 2 are both z, an area size of the contact surface between the heat-absorbing substance layer 3 and the battery cell 1 is smaller than an area size of the battery cell 1, the volume of the heat-absorbing substance layer 3 is V, the length of the battery cell 1 is A, the width of the battery cell 1 is B, and the thickness of the battery cell 1 is C. Since the battery cell 1 has a certain volume expansion in the end state of service life of the battery cell, the rate of volume expansion is w, and a volume size of the heat-absorbing substance layer 3 needs to satisfy the following relationship: 0.2*A*B ≤ V ≤ (z-α *w*C) * A *B. A blank area between the sealing structure and the heat-absorbing substance layer 3 serves as a buffer region for expansion of the battery cell 1, and the expansion of the battery cell 1 compresses the heat-absorbing substance layer 3 to expand outward, thereby ensuring not only the heat-absorbing effect, but also ensuring that the heat-absorbing substance layer 3 is not damaged when the battery is expanded, thereby improving safety. The thickness of the heat-absorbing substance layer 3 is consistent with the gap between two adjacent battery cells 1, and the stacking force of the battery cells 1 and an interaction force between the heat-absorbing substance layer 3 and the large surface of the battery cells 1 can fix the heat-absorbing substance layer 3 at the center of the first surface of the battery cells 1.

In order to absorb the heat of the battery cell 1 under thermal runaway, the present disclosure provides a fast and efficient heat absorption technology to solve the problem of thermal diffusion between the battery cells 1. Specifically, in the present disclosure, hydrogel is selected as the heat-absorbing substance layer 3, and a large amount of heat generated inside the battery cell 1 is removed by the heating and vaporization process of water, which can suppress thermal propagation in the thermal runaway process of the battery.

The present disclosure also provides a battery pack, the battery pack includes a battery case and the battery assembly described in each of the above embodiments, and the battery assembly is located in the battery case. Since the battery assembly of the present disclosure is mounted in the battery pack, the battery pack also has the same advantageous effects as those of the battery assembly described above.

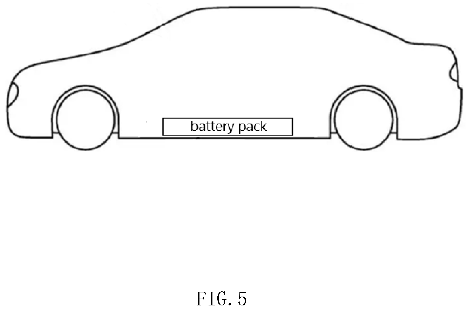

The present disclosure also provides an electrical system, the electrical system includes the battery pack described in the above embodiment or the battery assembly described in the above embodiment. Since the battery pack of the present disclosure is mounted in the electrical system, the electrical system also has the same advantages as those of the battery pack described above. As shown in FIG. 5, the electrical system may be an electrical system of a vehicle, and the electrical system including the battery pack described in the above embodiment may be arranged on the vehicle. Further, in other embodiments, the electrical system may also be an energy storage system, such as an energy storage cabinet, an energy storage container, or the like. The preferred embodiments of the present disclosure have been described in detail above with reference to the accompanying drawings, but the present disclosure is not limited to the specific details in the above embodiments, and a variety of simple modifications can be made to the technical scheme of the present disclosure within the scope of the technical concept of the present disclosure, and these simple modifications all belong to the protection scope of the present disclosure.

It will be noted that each of the specific technical features described in the above-described detailed description may be combined in any suitable manner unless there is no contradiction. In order to avoid unnecessary repetition, various possible combinations will not be further described in this application.

In addition, any combination of various embodiments of the present disclosure may be made, and as long as it does not depart from the idea of the present disclosure, it will also be regarded as the disclosed content of the present disclosure.

## Claims

1. A battery assembly, comprising:
two adjacent battery cells (1); and
a heat-absorbing substance layer (3) arranged between the two adjacent battery cells (1);
opposite surfaces of the two adjacent battery cells (1) being first surfaces, and the heat-absorbing substance layer (3) being located between the first surfaces of the two adjacent battery cells (1);
a volume of the heat-absorbing substance layer (3) being V, and 0.2*A*B ≤ V ≤ (z-α *w*C) *A*B being satisfied, mm being the unit used for A , B, C, and z, a distance between the first surfaces of the two adjacent battery cells (1) being z, a rate of volume expansion of a battery cell (1) in the end state of service life of the battery cell being w, a first side length of the first surface of the battery cell (1) being A, a second side length of the first surface of the battery cell (1) being B, a third side length of the battery cell (1) being C, α being a preset correction coefficient, and an extension line of the first side length, an extension line of the second side length, and an extension line of the third side length being perpendicular to each other.

2. The battery assembly according to claim 1, further comprising an external encapsulation (5), the external encapsulation (5) being disposed outside the heat-absorbing substance layer (3).

3. The battery assembly according to claim 2, wherein the external encapsulation (5) is an encapsulating film that covers outside the heat-absorbing substance layer (3).

4. The battery assembly according to claim 2 or 3, wherein the external encapsulation (5) is a sealing structure disposed around the first surfaces of two adjacent battery cells (1), the sealing structure and the first surfaces of the two adjacent battery cells (1) are jointly enclosed to form an expanded area (2), and the heat-absorbing substance layer (3) is accommodated in the expanded area (2).

5. The battery assembly according to claim 4, wherein the sealing structure comprises extending edges of two adjacent battery cells edges respectively extending toward each other and sealingly connected to each other;
or, the sealing structure comprises an extending edge extending from an edge of one of the two adjacent battery cells (1) to the other battery cell, and the extending edge is sealingly connected with the other battery cell.

6. The battery assembly according to any one of claims 2 to 5, wherein the heat-absorbing substance layer is a phase change substance layer, the phase change substance layer is adapted to generate a gas; wherein the external encapsulation (5) is provided with a discharge device (4) for discharging gas to the outside.

7. The battery assembly according to claim 6, wherein the external encapsulation (5) is a metal film.

8. The battery assembly according to claim 6 or 7, wherein the discharge device (4) is an explosion-proof valve.

9. The battery assembly according to any one of claims 1 to 8, wherein a length of the battery cell (1) is A, a width of the battery cell (1) is B, and a thickness of the battery cell (1) is C, which satisfies: 70 mm ≤ A ≤1500 mm, 30 mm ≤ B ≤500 mm, and 6 mm ≤ C ≤100 mm.

10. The battery assembly according to any one of claims 1 to 9, wherein a distance between the first surfaces of the two adjacent battery cells (1) is z, which satisfies: 0.2 mm ≤ z ≤10 mm.

11. The battery assembly according to any one of claims 1 to 10, wherein the rate of volume expansion of the battery cell (1) in the end state of service life of the battery cell is w, and the w satisfies: 0≤ w ≤20%.

12. The battery assembly according to claim 11, wherein, when 0≤ w ≤5%, the preset correction coefficient α=0.65; when 5% <w ≤10%, the preset correction coefficient α=0.55; when 10% <w ≤15%, the preset correction coefficient α=0.45; when 15% <w ≤20%, the preset correction coefficient α=0.35.

13. The battery assembly according to any one of claims 1 to 12, wherein the heat-absorbing substance layer (3) is a hydrogel layer.

14. The battery assembly according to any one of claims 1 to 13, wherein an orthographic projection of the heat-absorbing substance layer (3) on a plane in which the first surface is located is within the first surface.

15. The battery assembly according to any one of claims 1 to 14, wherein the battery assembly comprises a plurality of battery cells (1), the plurality of battery cells (1) are spaced apart in a direction parallel to the third side length, and the heat-absorbing substance layer is arranged between the two adjacent battery cells (1).

16. A battery pack, comprising:
a battery case; and
the battery assembly according to any one of claims 1 to 15, the battery assembly being located in the battery case.

17. An electrical system, comprising:
the battery assembly according to any one of claims 1 to 15 or the battery pack according to claim 16.
